# EUROPEAN PATENT SPECIFICATION

(11) **EP 1 718 793 B1**
(45) Date of publication and mention of the grant of the patent: **24.12.2008**
(21) Application number: 05726620.7
(22) Date of filing: 25.02.2005
(51) Int. Cl.: D06F 37/30

(54) **STATOR OF OUTER ROTOR-TYPE MOTOR AND METHOD FOR THE SAME**
STATOR FÜR AUSSENROTORMOTOR UND VERFAHREN DAFÜR
STATOR DE MOTEUR DE TYPE A ROTOR EXTERNE ET PROCEDE ASSOCIE

(30) Priority: 26.02.2004 KR 2004012998; 26.02.2004 KR 2004012997; 26.02.2004 KR 2004012996; 03.03.2004 KR 2004014310
(43) Date of publication of application: 08.11.2006
(73) Proprietor: LG Electronics Inc., Seoul 150-721 (KR)
(72) Inventor: Lee, Woon Yong, Gwangju-si 506-802 (KR)
(74) Representative: Vossius & Partner
(86) International application number: PCT/KR2005/000515
(87) International publication number: WO 2005/081645

(56) References cited:
- WO-A1-92/22121
- US-A- 4 835 839

## Description

The present invention relates to an outer rotor-type motor, and more particularly, to a stator structure of an outer rotor-type motor applied to a direct coupling type drum washing machine.

In general, a drum washing method is a washing method performing washing using frictional force between a rotating drum and laundries, the drum rotated by receiving driving force from a motor, when detergent, wash water and laundries are introduced in a drum. The drum washing method enables to prevent the laundries from being damaged and from being tangled with each other, and to achieve a rub washing effect.

A conventional drum washing machine is divided into an indirect coupling method of transmitting driving force of the motor to a drum indirectly through a motor pulley and a belt being wound around the drum pulley, and a direct coupling method of transmitting driving force of the motor directly to the drum by providing a rotor of a BLDC motor directly coupled with the drum.

In this case, the method of transmitting driving force of the motor to the drum not directly but indirectly through the motor pulley and the belt wound around the belt pulley has a disadvantage of generating energy loss and many noises in a process of transmitting the driving force. Accordingly, in order to solve problems of the conventional washing machine, use of the direct coupling type drum washing method is an increasing trend.

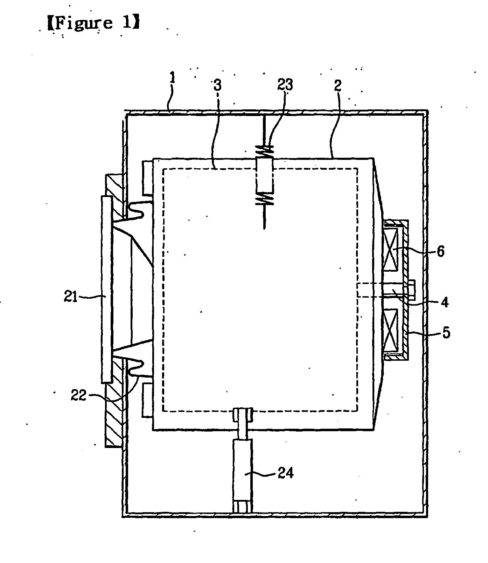

Referring to FIG. 1, a structure of the conventional direct coupling type washing machine will be briefly described as follows. FIG. 1 illustrates a longitudinal section showing a structure of a conventional drum washing machine that includes a tub 2 provided in a cabinet 1, and a drum 3 provided at a center in the tub 2.

A motor is provided at a rear side of the tub 2, a stator 6 is fixed on a rear wall of the tub, and a rotor 5 is passed through the tub and covers the stator 6 so as to be axially coupled with the drum 3 through the tub.

Meanwhile, a door 21 is provided in front of the door 1, and a gasket 22 is provided between the door 21 and the tub 2.

A hanging spring 23 for supporting the tub 2 is provided between an upper inner side of the cabinet 1 and an upper outer circumferential surface of the tub 2. A friction damper 24 for decreasing vibration of the tub 2 generated during dehydration is provided between an inner lower surface of the cabinet 1 and a lower outer circumferential surface of the tub 2.

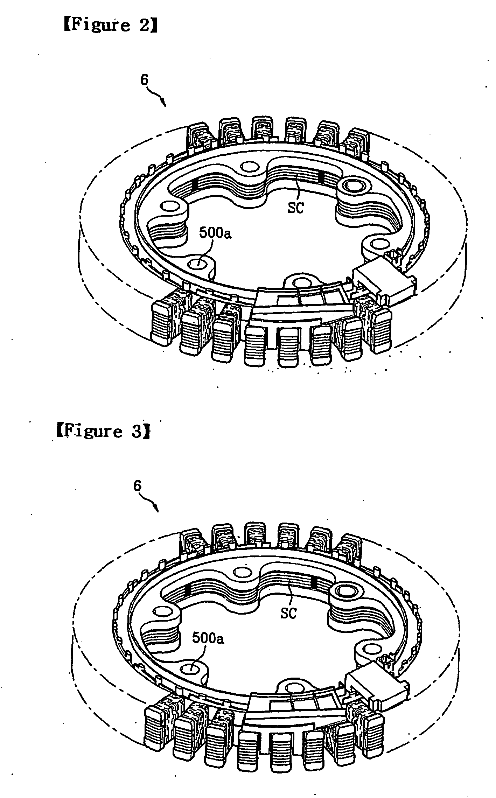

Meanwhile, FIG. 2 illustrates a perspective view showing an outer appearance of the stator of the FIG. 1, and FIG. 3 illustrates a perspective view showing a sectional core applied to the stator of FIG. 2. A conventional method of manufacturing a stator core includes the steps of press processing a steel plate to manufacture a plurality of unit cores each having a plurality of teeth 151 and a base member 150 on one side of each of the plurality of teeth 151, and a protrusion or projection 500 formed on a second side opposite side of each of the teeth 151, and stacking up the unit cores to make an assembly, and connecting the unit cores each other in a circumferential direction to complete a stator core called a sectional core.

In this instance, the protrusion provides the coupling hole 500a needed when the stator 6 is coupled with a rear wall of the tub, and plays a role of holding connection force of a bolt.

The method of manufacturing the.stator 6 using the sectional core (SC) is very complicated and generates a loss of materials. Accordingly, In order to reduce waste of the materials and to make the manufacturing process simple, it is good to use a so-called helical core made by stacking up and spirally rotating a steel plate including a teeth and a base member. The helical core however has a disadvantage that it is difficult to have a projection formed thereon for coupling the stator with the inside of the core because a bunch of steel plates stamped in a string form needs to be bent when the helical core is manufactured.

It is because the core becomes too wide to bend when the projection 500 is formed inside of the core during the manufacture of the helical core (HC).

Accordingly, a stator with an improved structure is demanded for enabling application of the helical core (HC) by performing same role of the protrusion of the sectional core not at the core itself but at another place.

As' a reference, the reason why it is important to secure enough rigidness of the protrusion is as follows, the protrusion that has the coupling hole for coupling the stator with the tub side.

A washing machine rotating a drum directly by using a BLDC motor includes a stator directly attached to a fixing side at the rear of the tub. As for a motor for a drum washing machine with a large capacity, the motor having a stator that weighs 1.5 kg by itself and being rotated at a maximum dehydration rotation speed of 600-2000rpm, a coupling part of the stator is damaged because of weight of the stator, vibration when the motor is rotated at a high speed and shake of the rotor 5.

Particularly, in a case of a drum washing machine using the BLDC motor and having the stator 6 coupled with a rear wall of the tub, they coupling part of the stator 6 and the rear wall of the tub is more severely damaged by vibration generated during washing because a diameter direction of the stator 6 is almost parallel to the ground.

Accordingly, it is very important to secure enough rigidness of the protrusion having the coupling hole coupled with the tub side of the stator 6.

Meanwhile, when the conventional sectional core is manufactured, there was a problem of material loss and a complex manufacturing process.

In other words, when the sectional core (SC) is manufactured, an assembly is made by press processing one unit core from one steel plate and stacking up the unit cores, and then the cores are connected to each other in a circumferential direction.

Accordingly, a large amount of materials are wasted because a great amount of steel plate is left after press processing of the core, and a large amount of plates are used for manufacturing the unit core and also the manufacturing process was complex because a protrusion 500 is provided on an opposite side of the teeth 151.

Therefore, a stator core for reducing material loss and simplifying the manufacturing process while playing same role as the sectional core (SC) is on demand.

An object of the present invention is to provide an outer rotor type motor having a stator that reduces waste of the materials and simplifies the manufacturing process, and is capable of being stably provided, at a fixing side such a tub or a bearing housing.

Another object of the present invention is to provide a stator with a new structure being capable of stably assembling the stator to a fixing side such as a tub or a bearing housing like the case of applying the sectional core, whereby the stator weighing at least 1.5kg is applicable to a drum type washer BLDC motor having a rotational speed over 2.000RPM.

To achieve these objects and other advantages and in accordance with the purpose of the invention, as embodied and broadly described herein, a stator of an outer rotor type motor comprising a helical core made by stacking up and spirally rotating a steel plate including a teeth and a base member; an upper insulator having a shape corresponding to a shape of the helical core to enclose an upper part of the helical core, a lower insulator having a shape corresponding to the shape of the helical core to enclose a lower part of the helical core in assembling to the upper insulator reciprocally, the lower insulator formed of the electrically insulating material, a coupling means provided at the steel plate including the helical core (HC) so as to prevent the steel plate from unwinding in a direction opposite to the rotation direction of the steel plate when the steel plate is stacked up and spirally rotated, and also to prevent the stacked steel plate from coming off from each other; and a groove is formed at the base member of the steel plate including the helical core (HC) so as to reduce stress during the winding of the core.

A stator of an outer rotor type motor for a drum type washing machine comprising: a helical core of a multi-layered structure formed by stacking a steel plate having a belt shaped base and Ts projected from the base while winding the steel plate in a helix starting from a bottom layer to a top layer; an upper insulator of an electric insulating material covered on an upper side of the helical core in a shape complementary to a shape of the helical core; and a lower insulator of an electric insulating material covered on a lower side of the helical core at the time of assembly with the upper insulator in a shape complementary to a shape of the helical core, wherein a steel plate forming the helical core includes a groove having a shape complementary to the helical core on an upper or lower surface of the steel plate, in order to prevent the steel plates from being unwinded in a direction opposite to the helical direction, when depositing steel plates by winding the steel plates in a helical direction, and to prevent the steel plates from becoming loose, and a fastening portion having projections facing into the fastening groove and being press-fitted to the upper or lower surface of the steel plate, and a base part of the helical core includes a notch so as to reduce stress when winding the core.

A stator of an outer rotor type motor comprising: an annular helical core of a multi-layered structure formed by stacking a steel plate having a belt shaped base and Ts projected from the base while winding the steel plate in a helix starting from a bottom layer to a top layer; an upper insulator of an electric insulating material covered on an upper side of the helical core in a shape complementary to a shape of the helical core; and a lower insulator of an electric insulating material in a shape complementary to a shape of the helical core to cover a lower side of the helical core at the time of assembly with the upper insulator, the helical core comprising: a dowel pin on an upper or lower surface of each of the Ts of the steel plate core, and a hole in complementary to the dowel pin, for preventing the steel plate core from unwinding in a direction opposite to a rotation direction of the helix, and coming off from underlying/overlying layer of the steel plate core at the time of stacking of the steel plate core while rotating the steel plate core in a helix; a notch in the base between each of adjacent Ts of the steel plate core, for reducing a stress when the steel plate core is wound; and a substantially "C " shaped end of each of the Ts, for reducing noise coming from a cogging torque during the motor is driven.

A method for fabricating a stator of an outer rotor type motor comprising the steps of: providing an electric sheet which is a base material; punching the base material, to form two rows of steel plate cores having one pair of base portions of band shapes opposite in a width direction, and Ts projected to an opposite base portion alternately;forming a multi-layered annular helical core by stacking the steel plate core while winding the steel plate core in a helix starting from a bottom layer to a top layer; and enclosing the helical core with an insulator of an electric insulating material having a shape in complementary to the helical core.

Loss and weight of materials needed for manufacturing a stator of a BLDC motor are reduced, a manufacturing process is simplified, and the stator is stably assembled to a fixing side such as a tub of a drum washing machine.

Materials for the manufacture of the helical core (HC) are reduced and a process of manufacturing the core is simplified.

Specifically, the stator can be stably assembled to the fixing side such as a tub or a bearing housing like the case of applying the sectional core, whereby the stator weighing at least 1.5kg is applicable to a drum type washer BLDC motor having a rotational speed over 2,000RPM.

When the present invention is applied for the manufacture of a drum washing machine, the stator is facilitated to be assembled to the tub, whereby a maintenance and repair work of a serviceman can be easily done for after-service.

The present invention prevents steel plates from unwinding and prevents gaps between any two adjacent layers of the stacked steel plates.

The present invention facilitates the prevention of the unwinding of adjacently stacked steel plates, the prevention of gaps between adjacent layers of the stacked steel plates, and the fabrication by employing the helical core to perform the winding work for the core formation with ease, and enhances the mechanical reliability and endurance by raising the rigidity of the fastening portion of the stator to reduce the noise and vibration.

The profile of the teeth of the helical core (HC) is formed in about " C " shape so as to reduce materials for the manufacture of the helical core (HC), and effectively reduce the noise and vibration.

The accompanying drawings, which are included to provide a further understanding of the invention and are incorporated in and constitute a part of this application, illustrate embodiment(s) of the invention and together with the description serve to explain the principle of the invention. In the drawings;
FIG. 1 illustrates a longitudinal section schematically showing a structural example of a conventional drum washing machine;
FIG. 2 illustrates a perspective view showing a structure of a standard stator;
FIG. 3 illustrates a perspective view showing a sectional core of FIG. 2;
FIG. 4 illustrates a perspective view showing an external appearance of a stator of present invention;
FIG. 5 illustrates an exploded perspective view of FIG. 4;
FIG. 6 illustrates a floor plan of "A" section of FIG. 5;
FIG. 7 illustrates a longitudinal section showing a principal part of a helical core taken along the line I-I of FIG. 6, which is a diagram showing a stacked state of the helical core;
FIG. 8 illustrates a rear perspective view showing a part of an upper insulator of FIG.5;
FIG. 9 illustrates a floor plan showing a principal part of the stator of FIG. 4;
FIGs. 10 and 11 illustrate a reference view for describing public use of an insulator; and
FIG. 12 illustrates a diagram schematically showing a manufacturing process of the helical core of FIG. 5.

Reference will now be made in detail to the preferred embodiments of the present invention, examples of which are illustrated in the accompanying drawings. Wherever possible, the same reference numbers will be used throughout the drawings to refer to the same or like parts.

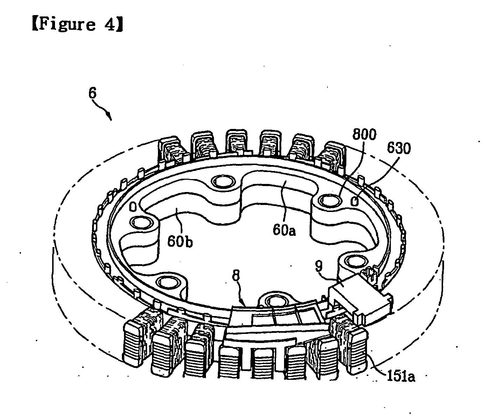

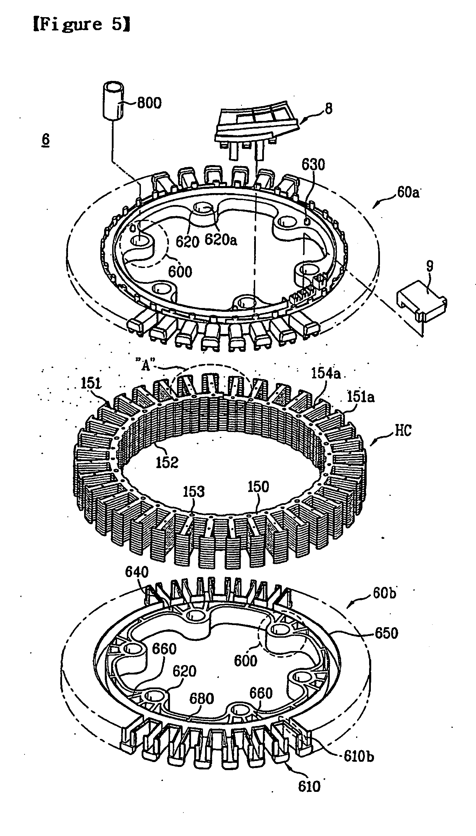

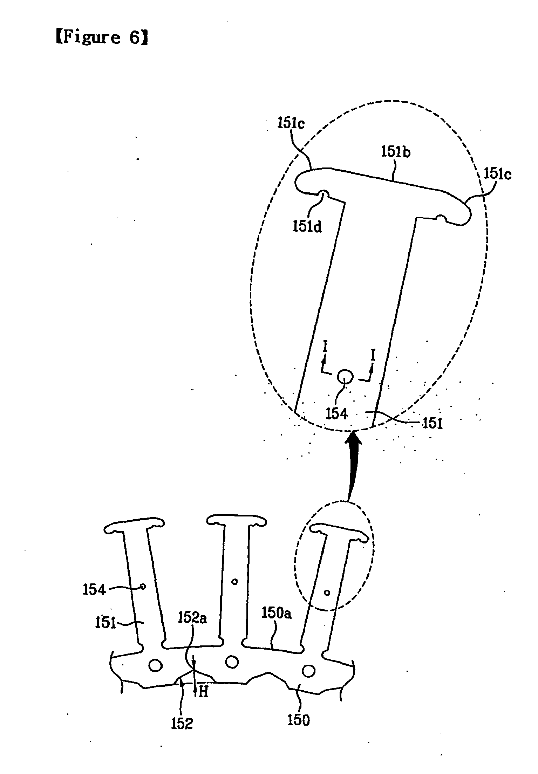

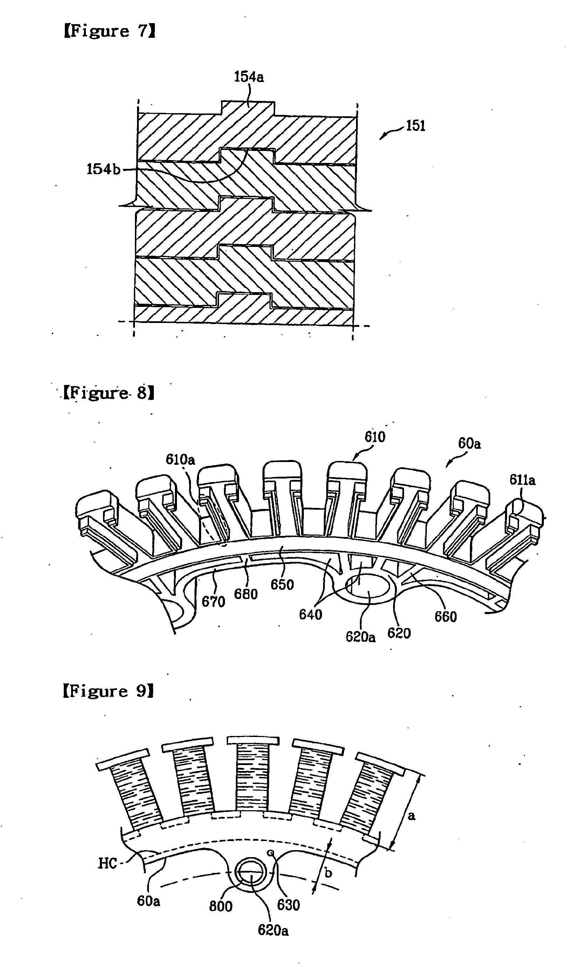

Hereinafter, an embodiment of the present invention will be described referring to FIGs. 4 to 12 as follows. FIG. 4 illustrates a perspective view showing an external appearance of a stator of present invention, FIG. 5 illustrates an exploded perspective view of FIG. 4, FIG. 6 illustrates a floor plan of "A" section of FIG. 5, and FIG. 7 illustrates a longitudinal section showing a principal part of a helical core taken along the line I-I of FIG. 6, which is a diagram showing a stacked state of the helical core.

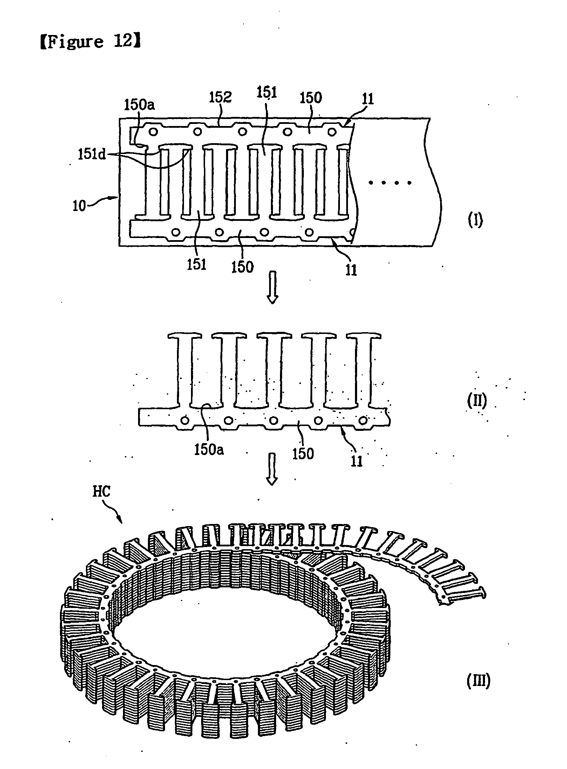

Meanwhile, FIG. 8 illustrates a rear perspective view showing a part of an upper insulator of FIG.5, FIG. 9 illustrates a floor plan showing a principal part of the stator of FIG. 4, FIGs. 10 and 11 illustrate a reference view for describing public use of an insulator, and FIG. 12 illustrates a diagram schematically showing a manufacturing process of the helical core of FIG. 5.

Referring to the drawings, a stator 6 of an outer rotor type motor in accordance with a first embodiment of the present invention includes a helical core (HC) formed in a ring shape and in a multilayer structure formed by stacking up and spirally winding up a steel plate from a bottommost layer to a topmost layer, an upper insulator 60a including an electrical insulating material and corresponding to shape of the helical core to cover an upper part of the helical core (HC), a lower insulator 60b being an electrical insulator and corresponding to shape of the helical core (HC) to cover a lower part of the helical core (HC), and a coupling member 600 (refer to FIG. 5) integrated into the upper and lower insulators 60a and 60b and protruded from at least three parts of the inside of the helical core (HC) to the center of the stator 6.

In this case, a groove 152 is formed at the base member 150 of the steel plate including the helical core (HC) so as to reduce stress during the winding of the core. The groove 152 has a maximum height (H) at the center portion 152a, the height of which gets smaller toward both ends on the basis of the center portion 152a, and is formed in a many-sided shape connected with an end of the base member 150.

*A coupling means is provided at the steel plate including the helical core (HC) so as to prevent a spring back phenomenon, that is to prevent the steel plate from unwinding in a direction opposite to the rotation direction of the steel plate when the steel plate is stacked up and spirally rotated, and also to prevent the stacked steel plate from coming off from each other.

In this case, referring to FIGs. 6 and 7, the coupling means includes a coupling protrusion 154a protruded from an upper surface of each of a plurality of teeth 151 of the steel plate, and a coupling recess 154b formed on a lower surface of each of the teeth 151 of the steel plate.

Meanwhile, contrary to the shape mentioned above, the coupling protrusion may of course be formed on the lower surface of the teeth 151 of the steel plate, and the coupling recess on the upper surface of the teeth 151 of the steel plate.

Referring to FIG. 6, an end of the teeth 151 of the helical core (HC) is formed in a "C" shape so as to lower vibration and noises due to [generated by] the cogging torque of the helical core (HC).

In other words, an end of the teeth 151 of the helical core (HC) is formed in a "C" shape as a whole by chamfering a corner portion 151c at each of both ends thereof on the basis of the center portion 151b.

In this instance, the corner portion 151c is chamfered in a straight line as illustrated, or, although not illustrated, in a curved line.

As a reference, the cogging torque or reluctance torque is a torque generated by change of magnetic reluctance at an aperture between the rotor and the stator, the aperture formed by position change of the rotor when the rotor is rotated. The cogging torque is unable to be an active principle of the motor torque, and thus it is desirably lowered.

The steel core plate 11 is stamped in two rows on an electric steel plate 10, that is on one electric steel plate 10, such that notch groove 150a formed in a shape same as the shape of the end portion of the teeth 151 is formed at the base member 150 being opposite to the teeth 151.

Meanwhile, when the steel core plate 11 is stamped in two rows, an ejector groove 151d is provided at the teeth 151 of the steel core plate core so as to smoothly separate the steel core plate core 11 from the teeth 151, and thereby to make it easier to separate the steel core plate 11 stamped in two rows on the electric steel plate 10.

In other words, when the steel plate core is separated, an ejector comes in contact with a concave for an ejector groove 151d and applies pressing force so as to enable separation of the core.

A coupling hole 620a (refer to FIG. 5) is formed at a coupling member 600 (Refer to FIG. 5) so as to fix the stator 6 to a fixing side such as a tub via the coupling means, and the coupling hole 620a is formed by a boss 620 of the coupling member 600.

A supporting rib 650 for supporting an inner surface of the core is formed along a circumferential direction of the supporting rib 650 on the inside of an unexposed surface which comes in contact with upper and lower surfaces of the helical core (HC) between the upper and lower insulators 60a and 60b.

Meanwhile, on an inner circumference of the coupling member 600 of each of the upper and lower insulators 60a and 60b, a supplementary rib 670 is formed in the direction of the non exposed surface, and at least one coupling rib 680 is coupled between the supplementary rib 670 and the supporting rib 650 that supports the inside of the core and provides supporting force.

Stepped surfaces 610a and 610b are formed on both side walls of the teeth 610 of each of the upper and lower insulators 60a and 60b, which are combined when assembled during assemblage.

In this instance, when one of the stepped surfaces 610a and 610b on both side walls of each of the teeth 610 is formed in "┐" shape, the other one is formed in "└" shape.

The stepped surfaces 610a and 610b are also combined together on both end surfaces each lying at right angels to both side walls of the each of the teeth 610 of the upper and lower insulators 60a and 60b.

*At an end of each of the teeth 610 of the upper and lower insulators 60a and 60b, a loading surface 611a having a core shoe 151a of the helical core (HC) (Refer to FIG. 5) stably is provided.

In addition, a position determining protrusion 630 formed at a fixing side of the tub, or a position determining protrusion 630 combined with a position determining hole (not shown) is formed around the coupling hole 620a formed at the coupling member 600 of the upper insulator 60a.

A sleeve 800 formed in a cylindrical shape and provided in the coupling hole 620a is a hollow pin enabling to be forcibly pressed into the coupling hole 620a, or a spring pin having elasticity due to an incised portion, and plays a role of bushing.

The groove 152 for reducing stress is provided at the base member 150 of the helical core (HC) so as to make the winding easy for shaping the core, and the helical core (HC) is riveted by a rivet 153 that passes through a through hole formed at the base member 150, and coupled thereto.

A winding starting portion and a winding ending portion of the helical core are respectively welded to a predetermined portion of the base member 150.

Referring to FIG. 9, the stator of the present invention is integrated into the upper and lower insulators 60a and 60b and includes the coupling member 600 inwardly protruded in a radius direction from at least three places of an inner circumferential surface of the core. When a length of each of the plurality of teeth 151 protruded from an outer surface of the helical core (HC) is "a" and a distance from an inner surface of the helical core (HC) to the center of the coupling hole formed at the coupling member 600 is "b" the coupling member 600 is formed to be defined as a = b.

Meanwhile, a reference number 8 of FIG. 5 is a hole sensor assembly for controlling a motor, and a reference number 9 thereof is a tap housing assembly for power connection, to supply power to the stator.

Operation of the present invention will be described as follows. First, in the present invention, a so-called helical core (HC) is employed as a core 15 including a stator, the helical core made by stacking up and spirally rotating a steel plate including a plurality of teeth, and a base member. Accordingly, contrary to the sectional core (SC), a process of assembling and welding sectional cores is omitted so as to simplify the manufacturing process.

Contrary to the sectional core, the helical core of the present invention has no protrusion, and thus material loss is reduced. In other words, a method of manufacturing the stator of the present invention is simple and reduces material loss.

A coupling means including a coupling protrusion 154a and a coupling recess 154b is provided at each of the teeth 151 of the steel plate which forms the helical core (HC). Accordingly, when the helical core is manufactured by stacking up and spirally rotating the steel plate, the coupling means makes it easy and exact to manufacture the core by preventing a spring back phenomenon, that is preventing the steel plate from unwinding in a direction opposite to the rotation direction of the steel plate, and also preventing the stacked steel plate from coming off from each other.

A groove 152 formed in a many-sided shape is formed at a base member 150 of the steel plate including the helical core (HC) so as to prevent the steel plate from unwinding in a direction opposite to the rotation direction of the steel plate by reducing stress during the winding of the core, and also to easily wind up the steel plate.

Meanwhile, magnetic reluctance change according to position change of a rotor and a stator is decreased because an end of the teeth 151 of the helical core (HC) is formed in a "C" shape, and thus cogging torque of the helical core (HC) is also decreased. Therefore, vibration and noises generated by the cogging torque are effectively decreased.

According to the present invention, because the steel core plate 11 is stamped in two rows from an electric steel plate 10, two steel core plates are manufactured from one steel plate by just one stamping process. Therefore, compared to a conventional method of manufacturing one steel core plate from one steel plate, an amount of the steel plate needed for manufacturing the core is greatly reduced, and also the manufacturing process is remarkably simplified.

In addition, with improved structures of the upper and lower insulators 60a and 60b, the stator 6 of the present invention has enough rigidness against bolt coupling force.

In other words, in the present invention, the coupling member 600 of the upper and lower insulators 60a and 60b is formed in a structure for playing same role as a protrusion of the sectional core (SC) such that a stator 6 to which the helical core (HC) is applicable can be provided.

A space 640 among a plurality of ribs 650, 660, 670 and 680 provided on a non-exposed surface of the coupling member 600 plays a role of buffering and decreasing vibration that is generated when the motor is driven, and thus increases machine reliability of the stator 6, and also reduces the insulator material.

Meanwhile, a support rib 650 is provided in a circumferential direction to radial insides of non-exposed surfaces of the upper and lower insulators 60a and 60b contacting with top and bottom of the helical core HC, respectively to support an inner lateral side of the core.

The supporting rib 660 formed at the coupling member 600 of the upper and lower insulators 60a and 60b to couple a boss 620 with the supporting rib 650 disperses coupling force stressed on the boss 620 and supplements rigidness of the coupling member 600.

Accordingly, the stator 6 of the present invention enables to efficiently prevent a coupling portion of the stator 6 from being damaged in a large capacity drum washing machine, the stator 6 weighing more than 1.5 kg by itself alone, and being rotatable at a dehydration speed of 600-2,000 rpm.

A position determining protrusion 630 formed around a coupling hole 620a of the coupling member 600 is coupled with a coupling determining hole (not shown) of the tub 2 so as to help the coupling of the stator 6.

When the stator 6 in accordance with the present invention is coupled with the tub 2, the stator 6 is more easily coupled with the tub 2 because of the position determining protrusion. Therefore, maintenance and repair work of a service man becomes easier during after-service.

In this instance, the position protrusion 630 is formed at the tub 2, and a position determining hole may be formed at the coupling member 600.

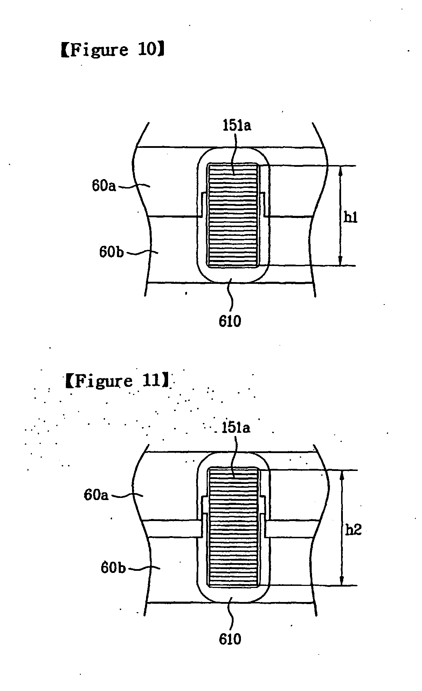

Meanwhile, FIGs. 10 and 11 shows a reference view showing a public use of the insulator, and the upper and lower insulators 60a and 60b of the present invention are applicable within a predetermined range even if a height of stacked helical core (HC) is different.

In other words, the height (h1) of the core in the case of FIG. 10 is the height when stepped surfaces 610a and 610b of the upper and lower insulators 60a and 60b are completely coupled with each other, and, in the case of FIG. 11, the height of the core is higher than that of FIG. 10 and the stepped surfaces 610a and 601b (Refer to FIGs. 5 and 8) of the upper an lower insulators 60a and 60b are not completely coupled with each other but are gapped.

In the case of FIG. 11, the height (h2) of the core is higher than that of the upper and lower insulators 60a and 60b when the stepped surfaces 610a and 610b (refer to FIGs. 5 and 8) of the upper and lower insulators 60a and 60b are not completely coupled with each other but gapped.

In the case of FIG. 11, the stepped surfaces 610a and 610b are gapped because the height (h2) of the stacked core is higher than a height thereof when stepped surfaces 610a and 610b of the upper and lower insulators 60a and 60b are completely coupled with each other. It is however applicable because the core teeth 151 is insulated.

Accordingly, regardless of the height of the core, the up and down separated type insulator is capable of being used for a general purpose and thus the operation efficiency is increased at an assembling line.

Meanwhile, referring to FIG. 12, a manufacturing process of the helical core (HC) in accordance with the present invention will be described as follows. (I),(II),(III) of FIG. 12 shows the manufacturing process of the helical core in order, and (I) of FIG. 12 shows a state right after stamping of an electric steel plate 10 is completed, and before the steel plate core 11 molded in two rows are ejected.

(II) of FIG. 12 shows a part of a unit steel plate core ejected from the electric steel plate 10, and (III) of FIG. 12 shows the shape of the unit steel core wounded up [109].

*As a reference, the coupling protrusion 154a, the coupling recess 154b and the ejector groove 151d illustrated in FIG. 6 are omitted from FIG. 12 to simplify the diagram.

Referring to FIG. 12, the manufacturing process of the helical core (HC) in accordance with the present invention includes a stamping process for opposing a pair of a base member 150 formed in a strip shape in a width direction, and stamping the unit steel core plate 11 from the electric steel plate 10 in two rows which is a state that the plurality of teeth 151 protruded from the base member 150 are crossed to each other, and a winding process for forming a multi layered structure by spirally rotating the unit steel core from a bottom most layer to a topmost layer, the unit steel core passed the stamping process.

In the stamping process, two rows of the steel core plate 11 are inwardly directed to face each other stamped and molded in two rows on one sheet of the electric steel plate 10 so as to form the notch groove 151s formed in a same shape as an end of each of the teeth 151 at the base member 150 on an opposite side of the teeth 151.

In this instance, the ejector groove 151d is provided at each of the teeth 151 so as to easily separate the steel core plate 11 from the electric steel plate 10, the steel core plate 11 stamped to face each other.

The steel core plate 11 is inwardly connected together stamped and molded as long as the length of the electric steel plate 10 by a press (not shown), and thus cut into a length needed for manufacturing one helical core (HC) after the stamping process.

Meanwhile, as mentioned above, the steel core plate 11 cut into pieces of a needed length has a predetermined diameter, and spirally rotated [wounded] and stacked up automatically by a winding device (not shown) such that the teeth 151 is outwardly protruded, and is thereby formed in a ring shape.

The steel core plate 11 wounded up and stacked is riveted by a rivet 153 and coupled thereto, the steel plate core 11 passing through a thorough hole formed at the base member 150.

The steel core plate 11 riveted as mentioned above is welded and adhered to parts of the base member 150, each of the parts adjacent to a starting portion (not shown) and an ending portion so as to complete one helical core (HC).

As a reference, the completed helical core (HC) is assembled with the upper and lower insulators 60a and 60b (Refer to the drawings 60a and 60b), and the stator 6 (Refer to FIG. 4) is completed when a coil 142 is coiled around the teeth 151 of the helical core (HC) assembled with the upper and lower insulators 60a and 60b.

It will be apparent to those skilled in the art that various modifications and variations can be made in the present invention without departing from the scope of the inventions. Thus, it is intended that the present invention covers the modifications and variations of this invention provided they come within the scope of the appended claims and their equivalents.

In the present invention, loss and weight of materials needed for manufacturing a stator of a BLDC motor are reduced, a manufacturing process is simplified, and the stator is stably assembled to a fixing side such as a tub of a drum washing machine.

Specifically, the stator can be stably assembled to the fixing side such as a tub or a bearing housing like the case of applying the sectional core, whereby the stator weighing at least 1.5kg is applicable to a drum type washer BLDC motor having a rotational speed over 2,000RPM.

When the present invention is applied for the manufacture of a drum washing machine, the stator is facilitated to be assembled to the tub, whereby a maintenance and repair work of a serviceman can be easily done for after-service.

The present invention prevents steel plates from unwinding and prevents gaps between any two adjacent layers of the stacked steel plates.

The present invention facilitates the prevention of the unwinding of adjacently stacked steel plates, the prevention of gaps between adjacent layers of the stacked steel plates, and the fabrication by employing the helical core to perform the winding work for the core formation with ease, and enhances the mechanical reliability and endurance by raising the rigidity of the fastening portion of the stator to reduce the noise and vibration.

The profile of the teeth of the helical core (HC) is formed in about " C" shape so as to reduce materials for the manufacture of the helical core (HC), and effectively reduce the noise and vibration.

The present invention has an advantage of reducing materials for the manufacture of the helical core (HC) and simplifying a process of manufacturing the core. Due to the effects, the present invention is highly applicable for industrial use.

## Claims

1. A stator (6) of an outer rotor type motor comprising:
a helical core (HC) made by stacking up and spirally rotating or winding a steel plate (11) including a teeth (151) and a base member (150);
an upper insulator (60a) having a shape corresponding to a shape of the helical core to enclose an upper part of the helical core,
a lower insulator (60b) having a shape corresponding to the shape of the helical core to enclose a lower part of the helical core in assembling to the upper insulator (60a) reciprocally, the lower insulator formed of the electrically insulating material, **characterized in that**:
a coupling means (154a, 154b) is provided at the steel plate (11) including the helical core (HC) so as to prevent the steel plate (11) from unwinding in a direction opposite to the rotation direction of the steel plate when the steel plate (11) is stacked up and spirally rotated, and also to prevent the stacked steel plate (11) from coming off from each other; and
a groove (162) is formed at the base member (150) of the steel plate (11) including the helical core (HC) so as to reduce stress during the winding of the helical core (HC).

2. The stator of an outer rotor type motor of claim 1, wherein the coupling means includes a coupling protrusion (154a) protruded from an upper or lower surface of the steel plate (11), and a coupling recess (154b) formed on a lower, or upper surface of the steel plate.

3. The stator of an outer rotor type motor of claim 1, wherein the coupling means is formed at a teeth member (151)of the steel plate (11).

4. The stator of an outer rotor type motor of claim 1, wherein the upper and lower insulators (60a, 60b) are integrated into the upper and lower insulators, and comprises a coupling member (600) protruded from an inside of the helical core (HC) to a center of the stator (6).

5. The stator of an outer rotor type motor of claim 4, wherein the coupling member comprises a coupling hole (620a) so as to fix the stator to a fixing side of the tub by the coupling means.

6. The stator of an outer rotor type motor of claim 4, wherein the coupling hole (620a) is formed by a boss of the coupling member, the boss protruded in a non-exposed surface direction.

7. The stator of an outer rotor type motor of claim 1, wherein a support rib is provided in a circumferential direction to radial insides of non-exposed surfaces of the upper and lower insulators (60a, 60b) contacting with top and bottom of the helical core (HC), respectively to support an inner lateral side of the core.

8. The stator of an outer rotor type motor of claim 1, wherein at least one support rib (650) is provided to the coupling part of the upper and lower insulators (60a, 60b) to connect the boss configuring the coupling hole (620a) to the support rib, thereby distributing a coupling force concentrated on the boss and reinforcing rigidity of the coupling part.

9. The stator of outer rotor type motor as claimed in claim 1, wherein steeps are formed at both sidewalls of the respective Ts of the lower and upper insulators (60a, 60b), according as the lower and upper insulators are connected to each other.

10. The stator of outer rotor type motor as claimed in claim 9, wherein, in the steeps formed at both sidewalls of the Ts, if one side of the Ts of the lower and upper insulators (60a, 60b) is formed in shape of "¬", the other side is formed in shape of "∟" .

11. The stator of outer rotor type motor as claimed in claim 1, wherein both end sides of the sidewalls, formed in perpendicular to each other at the both sidewalls of the Ts of the lower and upper insulators (60a, 60b), are shaped complementary to form the steep of the same plane.

12. The stator of outer rotor type motor as claimed in claim 1, wherein a protruding fixation surface is formed at the outer side of the both end.sides of the Ts of the lower and upper insulators (60a, 60b) for fixation of a core shoe (151a) of the helical core.

13. The stator of outer rotor type motor as claimed in claim 1, wherein a position-determining protrusion (630) is formed around a connection hole provided in a connection part of the upper insulator (60a), and the position-determining protrusion (630) is formed in shape of complementary to a position-determining recess or a position-determining hole formed at a fixed.side of the tub.

14. The stator of outer rotor type motor as claimed in claim 1, wherein a cylindrical sleeve is formed in the inside of the connection hole.

15. The stator of outer rotor type motor as claimed in claim 14, wherein the cylindrical sleeve is a spring pin having elasticity because of a cut part along a length direction of an outer circumferential surface.

16. The stator of outer rotor type motor as claimed in claim 14, wherein the cylindrical sleeve having no cut part is formed in a hollow shape for being forcibly inserted to the connect ion hole.

17. The stator of outer rotor type motor as claimed in claim 1, wherein the helical core is riveted by a rivet (153) of passing through a through-hole formed in a base.

18. The stator of outer rotor type motor as claimed in claim 1, a winding starting point and a winding ending point of the helical core are welded to predetermined portions of the base.

19. The stator of outer rotor type motor as claimed in claim 1, wherein
"a" a length of Ts protruding from an outer surface of the helical core (HC), is the same to or larger than "b" a distance between an inner surface of the helical core (HC) and a central point of the connection hole formed in the connection part, that is, "a≥b"

20. The stator of outer rotor type motor as claimed in claim 1, wherein an insertion recess of the core is formed in a semi-cylindrical shape or an oval shape.

21. The stator of outer rotor type motor as claimed in claim 20, wherein, the insertion recess has a symmetric structure with respect to the central point thereof, and the central point of the insert ion recess is deeper than the both sides of the insertion recess.

22. The stator of outer rotor type motor as claimed in claim 20 or 21, wherein the insertion recess is formed in the base of the helical core (HC), and the insertion recess is positioned between Ts of the helical core and Ts.

23. The stator of outer rotor type motor as claimed in claim 1, wherein an end of Ts is formed in shape of "C" to decrease vibration and noise generated by cogging torque of the helical core.

24. The stator of claim 23, wherein an edge portion of the Ts of the helical core is formed in a "C "shape by chamfering of corner portions of each side ends.

25. The stator of claim 24, wherein the chamfering is formed in a straight line or a curved line.

26. The stator of claim 1, wherein the steel core plate (11) is formed by punching two lines on an electric sheet (10), and a notch groove (150a) having an identical shape as the edge portion of the Ts is formed on a base part facing into the Ts.

27. The stator of claim 26, wherein an ejector groove (151d) is formed on the teeth (151) of the steel core plate (11) so as to facilitate a separation process of the steel core plate (11).

28. A stator of an outer rotor type motor of claim 1, wherein
the helical core (HC) of a multi-layered structure is formed by stacking the steel plate (11) having a belt shaped base and Ts' projected from the base while winding the steel plate (11) in a helix starting from a bottom layer to a top layer;
the upper insulator (60a) of an electric insulating material covered on an upper side of the helical core (HC) in a shape complementary to a shape of the helical core; and
the lower insulator (60b) of an electric insulating material is covered on a lower side of the helical core at the time of assembly with the upper insulator (60a) in a shape complementary to a shape of the helical core (HC),
wherein a steel plate forming the helical core (HC) includes a groove (152) having a shape complementary to the helical core on an upper or lower surface of the steel plate (11), in order to prevent the steel plate from being unwinded in a direction opposite to the helical direction, when depositing steel plate by winding the steel plate in a helical direction, and to prevent the steel plate from becoming loose, and a fastening portion having projections facing into the fastening groove and being press-fitted to the upper or lower surface of the steel plate, and
a base part of the helical core includes a notch so as to reduce stress when winding the core.

29. A stator of an outer rotor type motor of claim 1 or 28, wherein
the helical core (HC) of a multi-layered structure is annular and formed by stacking the steel plate (11) having a belt shaped base and Ts projected from the base while winding the steel plate (11) in a helix starting from a bottom layer to a top layer;
the upper insulator of an electric insulating material is covered on an upper side of the helical core in a shape complementary to a shape of the helical core (HC); and
the lower insulator of an electric insulating material is arranged in a shape complementary to a shape of the helical core to cover a lower side of the helical core at the time of assembly with the upper insulator (60a), the helical core comprising:
a dowel pin on an upper or lower surface of each of the Ts of the steel plate core, and a hole in complementary to the dowel pin, for preventing the steel core plate (11) from unwinding in a direction opposite to a rotation direction of the helix, and coming off from underlying/overlying layer of the steel plate core at the time of stacking of the steel core plate (11) while rotating the steel core plate (11) in a helix;
a notch in the base between each of adjacent Ts of the steel core plate (11), for reducing a stress when the steel plate core is wound; and
a substantially "C" shaped end of each of the Ts, for reducing noise coming from a cogging torque during the motor is driven.

30. A method for fabricating a stator of an outer rotor type motor comprising the steps of:
providing an electric sheet (10) which is a base material;
punching the base material, to form two rows of steel core plates (11) having one pair of base portions (150) of band shapes opposite in a width direction, and teeths or Ts (151) projected to an opposite base portion alternately;
forming a multi-layered annular helical core (HC) by stacking the steel core plate (11) while winding the steel core plate (11) in a helix starting from a bottom layer to a top layer;
enclosing the helical core (HC) with an insulator (60a, 60b) of an electric insulating material having a shape in complementary to the helical core;
**characterized by** forming a groove (152) at the base portion (150) of the steel core plate (11) to reduce stress during the winding of the helical core (HC); and providing a coupling means (154a, 154b) at the steel core plate (11) to prevent the steel core plate from unwinding when the steel core plate is stacked.

31. The method as claimed in claim 30, wherein the base material is punched in two rows such that a notch (150a) having a shape identical to a shape of an end of one side of the Ts is formed in the base portion opposite to the one side Ts.

32. The method as claimed in claim 30, wherein the Ts of the steel plate core has a concave for eject formed therein for smooth separation of the steel core plates

33. The method as claimed in claim 30, wherein the end of the Ts of the steel core plate is formed in a "C " shape substantially for reducing vibration and noise caused by cogging torque of the helical core.

34. The method as claimed in claim 30, wherein the step of enclosing the helical core includes the steps of;
covering an upper side of the helical core with an upper insulator (60a) of an electric insulating material having a shape in complementary to a shape of an upper portion of the helical core (HC), and
covering a lower side of the helical core with a lower insulator (60b) of an electric insulating material having a shape in complementary to a shape of a lower portion of the helical core.

35. The method as claimed in claim 30, wherein the base portion of the steel core plate (11) has a notch for reducing stress when the core is wound.

## Patentansprüche

1. Ständer (6) eines Außenläufermotors mit:
einem durch Stapeln und spiralförmiges Drehen oder Wickeln eines Stahlblechs (11) hergestellten Spiralkern (HC) mit einem Zahn- (151) und einem Basiselement (150); einem oberen Isolator (60a) mit einer Form, die einer Form des Spiralkerns entspricht, um ein Oberteil des Spiralkerns einzuschließen;
einem unteren Isolator (60b) mit einer Form, die der Form des Spiralkerns entspricht, um ein Unterteil des Spiralkerns beim gegenseitigen Anbauen am oberen Isolator (60a) einzuschließen, wobei der untere Isolator aus dem elektrisch isolierenden Material gebildet ist,
**dadurch gekennzeichnet, daß:**
eine Koppeleinrichtung (154a, 154b) am Stahlblech (11) mit dem Spiralkern (HC) vorgesehen ist, um das Stahlblech (11) am Abwickeln in Gegenrichtung zur Drehrichtung des Stahlblechs beim Stapeln und spiralförmigen Drehen des Stahlblechs (11) zu hindern und zudem das gestapelte Stahlblech (11) am Lösen voneinander zu hindern; und
eine Nut (152) am Basiselement (150) des Stahlblechs (11) mit dem Spiralkern (HC) gebildet ist, um Spannung beim Wickeln des Spiralkerns (HC) abzubauen.

2. Ständer eines Außenläufermotors nach Anspruch 1, wobei die Koppeleinrichtung aufweist: einen Koppelvorsprung (154a), der von einer Ober- oder Unterseite des Stahlblechs (11) vorsteht, und eine Koppelaussparung (154b), die auf einer Unter- oder Oberseite des Stahlblechs gebildet ist.

3. Ständer eines Außenläufermotors nach Anspruch 1, wobei die Koppeleinrichtung an einem Zahnelement (151) des Stahlblechs (11) gebildet ist.

4. Ständer eines Außenläufermotors nach Anspruch 1, wobei der obere und untere Isolator (60a, 60b) in den oberen und unteren Isolator integriert sind und ein Koppelelement (600) aufweist, das von einer Innenseite des Spiralkerns (HC) zu einer Mitte des Ständers (6) vorsteht.

5. Ständer eines Außenläufermotors nach Anspruch 4, wobei das Koppelelement ein Koppelloch (620a) aufweist, um den Ständer an einer Befestigungsseite des Bottichs durch die Koppeleinrichtung zu befestigen.

6. Ständer eines Außenläufermotors nach Anspruch 4, wobei das Koppelloch (620a) durch eine Vorwölbung des Koppelelements gebildet ist, wobei die Vorwölbung in Richtung einer nicht freiliegenden Oberfläche vorsteht.

7. Ständer eines Außenläufermotors nach Anspruch 1, wobei eine Stützrippe in Umfangsrichtung an Radialinnenseiten nicht freiliegender Oberflächen des oberen und unteren Isolators (60a, 60b) vorgesehen ist, die eine Ober- bzw. Unterseite des Spiralkerns (HC) kontaktieren, um eine Innenseitenfläche des Kerns abzustützen.

8. Ständer eines Außenläufermotors nach Anspruch 1, wobei mindestens eine Stützrippe (650) am Koppelteil des oberen und unteren Isolators (60a, 60b) vorgesehen ist, um die das Koppelloch (620a) konfigurierende Vorwölbung mit der Stützrippe zu verbinden, wodurch eine auf die Vorwölbung konzentrierte Koppelkraft verteilt und die Steifigkeit des Koppelteils verstärkt ist.

9. Ständer eines Außenläufermotors nach Anspruch 1, wobei Steilabschnitte an beiden Seitenwänden der jeweiligen Ts des unteren und oberen Isolators (60a, 60b) gemäß der gegenseitigen Verbindung des unteren und oberen Isolators gebildet sind.

10. Ständer eines Außenläufermotors nach Anspruch 9, wobei in den an beiden Seitenwänden der Ts gebildeten Steilabschnitten gilt: Ist eine Seite der Ts des unteren und oberen Isolators (60a, 60b) in "¬"-Form ausgebildet, so ist die andere Seite in "L"-Form ausgebildet.

11. Ständer eines Außenläufermotors nach Anspruch 1, wobei beide Endseiten der Seitenwände, die an den beiden Seitenwänden der Ts des unteren und oberen Isolators (60a, 60b) senkrecht zueinander ausgebildet sind, komplementär geformt sind, um den Steilabschnitt derselben Ebene zu bilden.

12. Ständer eines Außenläufermotors nach Anspruch 1, wobei eine vorstehende Befestigungsfläche an der Außenseite der beiden Endseiten der Ts des unteren und oberen Isolators (60a, 60b) zur Befestigung eines Kernschuhs (151a) des Spiralkerns gebildet ist.

13. Ständer eines Außenläufermotors nach Anspruch 1, wobei ein Positionsbestimmungsvorsprung (630) um ein Verbindungsloch gebildet ist, das in einem Verbindungsteil des oberen Isolators (60a) vorgesehen ist, und der Positionsbestimmungsvorsprung (630) in komplementärer Form zu einer Positionsbestimmungsaussparung oder einem Positionsbestimmungsloch ausgebildet ist, das an einer befestigten Seite des Bottichs gebildet ist.

14. Ständer eines Außenläufermotors nach Anspruch 1, wobei eine Zylinderbuchse im Inneren des Verbindungslochs gebildet ist.

15. Ständer eines Außenläufermotors nach Anspruch 14, wobei die Zylinderbuchse ein Federstift mit Elastizität aufgrund eines Schnitteils in Längsrichtung einer Außenumfangsfläche ist.

16. Ständer eines Außenläufermotors nach Anspruch 14, wobei die Zylinderbuchse ohne Schnitteil in Hohlform zum zwangsweisen Einsetzen in das Verbindungsloch ausgebildet ist.

17. Ständer eines Außenläufermotors nach Anspruch 1, wobei der Spiralkern durch einen Niet (153) vernietet ist, der ein in einer Basis gebildetes Durchgangsloch durchläuft.

18. Ständer eines Außenläufermotors nach Anspruch 1, wobei ein Wickelanfangspunkt und ein Wickelendpunkt des Spiralkerns mit vorbestimmten Abschnitten der Basis verschweißt sind.

19. Ständer eines Außenläufermotors nach Anspruch 1, wobei "a" als Länge von Ts, die von einer Außenfläche des Spiralkerns (HC) vorstehen, gleich oder größer als "b" als Abstand zwischen einer Innenfläche des Spiralkerns (HC) und einem Mittelpunkt des im Verbindungsteil gebildeten Verbindungslochs ist, also "a ≥ b".

20. Ständer eines Außenläufermotors nach Anspruch 1, wobei eine Einsetzaussparung des Kerns in halbzylindrischer Form oder ovaler Form ausgebildet ist.

21. Ständer eines Außenläufermotors nach Anspruch 20, wobei die Einsetzaussparung einen symmetrischen Aufbau im Hinblick auf ihren Mittelpunkt hat und der Mittelpunkt der Einsetzaussparung tiefer als die beiden Seiten der Einsetzaussparung ist.

22. Ständer eines Außenläufermotors nach Anspruch 20 oder 21, wobei die Einsetzaussparung in der Basis des Spiralkerns (HC) gebildet ist und die Einsetzaussparung zwischen Ts des Spiralkerns und Ts positioniert ist.

23. Ständer eines Außenläufermotors nach Anspruch 1, wobei ein Ende von Ts in "C"-Form ausgebildet ist, um Schwingungen und Geräusche zu verringern, die durch Rastmoment des Spiralkerns erzeugt werden.

24. Ständer nach Anspruch 23, wobei ein Kantenabschnitt der Ts des Spiralkerns durch Abfasen von Eckenabschnitten jeder Seitenenden in "C"-Form ausgebildet ist.

25. Ständer nach Anspruch 24, wobei die Abfasung in einer geraden Linie oder einer gekrümmten Linie ausgebildet ist.

26. Ständer nach Anspruch 1, wobei das Stahlkernblech (11) durch Stanzen zweier Linien auf einem Elektroblech (10) gebildet ist und eine Kerbnut (150a) mit einer identischen Form wie der Kantenabschnitt der Ts an einem in die Ts weisenden Basisteil gebildet ist.

27. Ständer nach Anspruch 26, wobei eine Ausstoßnut (151d) an den Zähnen (151) des Stahlkernblechs (11) gebildet ist, um einen Trennvorgang des Stahlkernblechs (11) zu erleichtern.

28. Ständer eines Außenläufermotors nach Anspruch 1, wobei der Spiralkern (HC) mit einem Mehrschichtaufbau durch Stapeln des Stahlblechs (11) mit einer gurtförmigen Basis und von der Basis vorstehenden Ts gebildet ist, während das Stahlblech (11) beginnend von einer unteren Schicht zu einer oberen Schicht in einer Spirale gewickelt ist;
der obere Isolator (60a) aus einem elektrischen Isoliermaterial eine Oberseite des Spiralkerns (HC) in einer Form abdeckt, die zu einer Form des Spiralkerns komplementär ist; und
der untere Isolator (60b) aus einem elektrischen Isoliermaterial eine Unterseite des Spiralkerns beim Zusammenbau mit dem oberen Isolator (60a) in einer Form abdeckt, die zu einer Form des Spiralkerns (HC) komplementär ist,
wobei ein den Spiralkern (HC) bildendes Stahlblech aufweist: eine Nut (152) mit einer zum Spiralkern komplementären Form auf einer Ober- oder Unterseite des Stahlblechs (11), um das Stahlblech am Abwickeln in Gegenrichtung zur Spiralrichtung beim Anordnen von Stahlblech durch Wickeln des Stahlblechs in Spiralrichtung zu hindern und das Stahlblech am Lösen zu hindern, und einen Befestigungsabschnitt mit Vorsprüngen, die in die Befestigungsnut weisen und mit der Ober- oder Unterseite des Stahlblechs verpreßt sind, und
ein Basisteil des Spiralkerns eine Kerbe aufweist, um Spannung beim Wickeln des Kerns abzubauen.

29. Ständer eines Außenläufermotors nach Anspruch 1 oder 28,
wobei
der Spiralkern (HC) mit einem Mehrschichtaufbau ringförmig und durch Stapeln des Stahlblechs (11) mit einer gurtförmigen Basis und von der Basis vorstehenden Ts gebildet ist, während das Stahlblech (11) beginnend von einer unteren Schicht zu einer oberen Schicht in einer Spirale gewickelt ist;
der obere Isolator aus einem elektrischen Isoliermaterial eine Oberseite des Spiralkerns in einer Form abdeckt, die zu einer Form des Spiralkerns (HC) komplementär ist; und
der untere Isolator aus einem elektrischen Isoliermaterial in einer Form angeordnet ist, die zu einer Form des Spiralkerns komplementär ist, um eine Unterseite des Spiralkerns beim Zusammenbau mit dem oberen Isolator (60a) abzudecken, wobei der Spiralkern aufweist:
einen Paßstift auf einer Ober- oder Unterseite jedes der Ts des Stahlblechkerns und ein zum Paßstift komplementäres Loch zum Verhindern, daß sich das Stahlkernblech (11) in Gegenrichtung zu einer Drehrichtung der Spirale abwickelt und sich von einer darunterliegenden/darüberliegenden Schicht des Stahlblechkerns beim Stapeln des Stahlkernblechs (11) löst, während das Stahlkernblech (11) in einer Spirale gedreht wird;
eine Kerbe in der Basis zwischen jedem von benachbarten Ts des Stahlkernblechs (11) zum Abbauen einer Spannung beim Wickeln des Stahlblechkerns; und
ein im wesentlichen "C"-förmiges Ende jedes der Ts zum Verringern von Geräuschen, die von einem Rastmoment während des Motorantriebs herrühren.

30. Verfahren zur Herstellung eines Ständers eines Außenläufermotors mit den Schritten:
Bereitstellen eines Elektroblechs (10), das ein Basismaterial ist;
Stanzen des Basismaterials, um zwei Reihen von Stahlkernblechen (11) mit einem Paar Basisabschnitten (150) mit Bandformen entgegengesetzt in Breitenrichtung sowie Zähnen oder Ts (151) zu bilden, die abwechselnd zu einem entgegengesetzten Basisabschnitt vorstehen;
Bilden eines mehrschichtigen ringförmigen Spiralkerns (HC) durch Stapeln des Stahlkernblechs (11), während das Stahlkernblech (11) beginnend von einer unteren Schicht zu einer oberen Schicht in einer Spirale gewickelt wird; Umschließen des Spiralkerns (HC) mit einem Isolator (60a, 60b) aus einem elektrischen Isoliermaterial mit einer zum Spiralkern komplementären Form;
**gekennzeichnet durch** Bilden einer Nut (152) am Basisabschnitt (150) des Stahlkernblechs (11), um Spannung beim Wickeln des Spiralkerns (HC) abzubauen; und Bereitstellen einer Koppeleinrichtung (154a, 154b) am Stahlkernblech (11), um das Stahlkernblech am Abwickeln zu hindern, wenn das Stahlkernblech gestapelt wird.

31. Verfahren nach Anspruch 30, wobei das Basismaterial in zwei Reihen so gestanzt wird, daß eine Kerbe (150a) mit einer Form, die mit einer Form eines Endes einer Seite der Ts identisch ist, im Basisabschnitt entgegengesetzt zu der einen Seite Ts gebildet wird.

32. Verfahren nach Anspruch 30, wobei die Ts des Stahlblechkerns eine darin gebildete Ausstoßvertiefung zur leichten Trennung der Stahlkernbleche hat.

33. Verfahren nach Anspruch 30, wobei das Ende der Ts des Stahlkernblechs im wesentlichen zum Verringern von Schwingungen und Geräuschen, die durch Rastmoment des Spiralkerns verursacht sind, in einer "C"-Form ausgebildet ist.

34. Verfahren nach Anspruch 30, wobei der Schritt des Umschließens des Spiralkerns die Schritte aufweist:
Abdecken einer Oberseite des Spiralkerns mit einem oberen Isolator (60a) aus einem elektrischen Isoliermaterial mit einer Form, die zu einer Form eines oberen Abschnitts des Spiralkerns (HC) komplementär ist; und
Abdecken einer Unterseite des Spiralkerns mit einem unteren Isolator (60b) aus einem elektrischen Isoliermaterial mit einer Form, die zu einer Form eines unteren Abschnitts des Spiralkerns komplementär ist.

35. Verfahren nach Anspruch 30, wobei der Basisabschnitt des Stahlkernblechs (11) eine Kerbe zum Abbauen von Spannung beim Wickeln des Kerns hat.

## Revendications

1. Stator (6) de moteur de type à rotor externe, comprenant :
■ un noyau hélicoïdal (HC) réalisé par l'empilement et la rotation en spirale ou l'enrouement d'une plaque en acier (11), comprenant un élément de dent (151) et de base (150);
■ un isolateur supérieur (60a) ayant une forme qui correspond à une forme du noyau hélicoïdal de façon à englober une partie supérieure du noyau hélicoïdal ;
■ un isolateur inférieur (60b) ayant une forme qui correspond à la forme du noyau hélicoïdal de façon à englober une partie inférieure du noyau hélicoïdal au moment de l'assemblage réciproque à l'isolateur supérieur (60a), l'isolateur inférieur étant composé du matériau électriquement isolant ;
**caractérisé en ce que :**
■ des moyens de couplage (154a, 154b) sont prévus au niveau de la plaque en acier (11) comprenant le noyau hélicoïdal (HC) de façon à empêcher que la plaque en acier (11) ne se déroule dans une direction opposée à la direction de rotation de la plaque en acier lorsque la plaque en acier (11) est empilée et enroulée en spirale, et de façon à empêcher également que la plaque en acier (11) empilée ne se détache des autres composants ; et
■ une gorge (152) est formée au niveau de l'élément de base (150) de la plaque en acier (11) comprenant le noyau hélicoïdal (HC) de façon à réduire une contrainte durant l'enroulement du noyau hélicoïdal (HC).

2. Stator d'un moteur de type à rotor externe selon la revendication 1, dans lequel les moyens de couplage comprennent une protubérance de couplage (154a) qui fait saillie à partir d'une face supérieure ou inférieure de la plaque en acier (11), et un évidement de couplage (154b) réalisé sur une face inférieure ou supérieure de la plaque en acier.

3. Stator d'un moteur de type à rotor externe selon la revendication 1, dans lequel les moyens de couplage sont réalisés au niveau d'un élément de dent (151) de la plaque en acier (11).

4. Stator d'un moteur de type à rotor externe selon la revendication 1, dans lequel les isolateurs supérieur et inférieur (60a, 60b) sont intégrés dans les isolateurs supérieur et inférieur, et comprend un élément de couplage (600) qui se projette en saillie depuis un intérieur du noyau hélicoidal (HC) vers un centre du stator (6).

5. Stator d'un moteur de type à rotor externe selon la revendication 4, dans lequel l'élément de couplage comprend un trou de couplage (620a) de façon à fixer le stator sur un côté de fixation de la cuve par les moyens de couplage.

6. Stator d'un moteur de type à rotor externe selon la revendication 4, dans lequel le trou de couplage (620a) est formé par un bossage de l'élément de couplage, le bossage faisant saillie dans la direction d'une surface non exposée.

7. Stator d'un moteur de type à rotor externe selon la revendication 1, dans lequel une nervure de support est réalisée dans une direction circonférentielle par rapport à des intérieurs radiaux de surfaces non exposées des isolateurs supérieur et inférieur (60a, 60b) en contact avec le haut et le bas du noyau hélicoïdal (HC), respectivement, de façon à supporter un côté latéral interne du noyau.

8. Stator d'un moteur de type à rotor externe selon la revendication 1, dans lequel au moins une nervure de support (650) est réalisée par rapport à la partie de couplage des isolateurs supérieur et inférieur (60a, 60b) de façon à raccorder le bossage configurant le trou de couplage (620a) à la nervure de support, afin de distribuer ainsi une force de couplage concentrée sur le bossage et de renforcer la rigidité de la partie de couplage.

9. Stator d'un moteur de type à rotor externe selon la revendication 1, dans lequel des passages raides sont formés au niveau des deux parois latérales des Ts respectives des isolateurs supérieur et inférieur (60a, 60b), lorsque les isolateurs supérieur et inférieur sont raccordés l'un à l'autre.

10. Stator d'un moteur de type à rotor externe selon la revendication 9, dans lequel, dans les passages raides formés au niveau des deux parois latérales des Ts, si l'un des côtés des Ts des isolateurs supérieur et inférieur (60a, 60b) est réalisé à la forme d'un "¬", l'autre côté est alors réalisé à la forme d'un "∟".

11. Stator d'un moteur de type à rotor externe selon la revendication 1, dans lequel les deux côtés d'extrémité des parois latérales, qui sont réalisés perpendiculairement l'un à l'autre au niveau des deux parois latérales des Ts des isolateurs supérieur et inférieur (60a, 60b), sont réalisés de manière complémentaire de façon à former le passage raide du même plan.

12. Stator d'un moteur de type à rotor externe selon la revendication 1, dans lequel une surface de fixation protubérante est formée au niveau du côté externe des deux côtés d'extrémité des Ts des isolateurs supérieur et inférieur (60a, 60b), en vue de la fixation d'une semelle de noyau (151a) du noyau hélicoïdal.

13. Stator d'un moteur de type à rotor externe selon la revendication 1, dans lequel une protubérance de détermination de position (630) est formée autour d'un trou de raccordement réalisé dans une partie de raccordement de l'isolateur supérieur (60a), et la protubérance de détermination de position (630) est réalisée à une forme complémentaire par rapport à un évidement de détermination de position ou à un trou de détermination de position formé sur un côté fixe de la cuve.

14. Stator d'un moteur de type à rotor externe selon la revendication 1, dans lequel un manchon cylindrique est formé à l'intérieur du trou de raccordement.

15. Stator d'un moteur de type à rotor externe selon la revendication 14, dans lequel le manchon cylindrique est une cheville à ressort dotée d'un pouvoir d'élasticité en raison d'une partie découpée dans le sens de la longueur d'une surface circonférentielle extérieure.

16. Stator d'un moteur de type à rotor externe selon la revendication 14, dans lequel le manchon cylindrique, dépourvu de partie découpée, est réalisé à une forme creuse de façon à être inséré de force dans le trou de raccordement.

17. Stator d'un moteur de type à rotor externe selon la revendication 1, dans lequel le noyau hélicoïdal est riveté au moyen d'un rivet (153) après être passé à travers un trou de passage formé dans une base.

18. Stator d'un moteur de type à rotor externe selon la revendication 1, dans lequel un point de départ d'enroulement et un point de fin d'enroulement du noyau hélicoïdal sont soudés à des parties prédéterminées de la base.

19. Stator d'un moteur de type à rotor externe selon la revendication 1, dans lequel :
"a" une longueur de Ts faisant saillie à partir d'une face externe du noyau hélicoïdal (HC) est égale ou supérieure à "b" une distance entre une face interne du noyau hélicoïdal (HC) et un point central du trou de raccordement formé dans la partie de raccordement, de telle sorte que "a ≥ b".

20. Stator d'un moteur de type à rotor externe selon la revendication 1, dans lequel un évidement d'insertion du noyau est réalisé à une forme semi-cylindrique ou à une forme ovale.

21. Stator d'un moteur de type à rotor externe selon la revendication 20, dans lequel l'évidement d'insertion a une structure symétrique par rapport au point central de celui-ci, et le point central de l'évidement d'insertion est plus profond que les deux côtés de l'évidement d'insertion.

22. Stator d'un moteur de type à rotor externe selon la revendication 20 ou 21, dans lequel l'évidement d'insertion est formé dans la base du noyau hélicoïdal (HC), et l'évidement d'insertion se trouve entre des Ts du noyau hélicoïdal et des Ts.

23. Stator d'un moteur de type à rotor externe selon la revendication 1, dans lequel une extrémité des Ts est réalisée sous la forme d'un "C" de façon à réduire des vibrations et un bruit produits par un couple de denture du noyau hélicoïdal.

24. Stator selon la revendication 23, dans lequel une partie de bord des Ts du noyau hélicoïdal est réalisée à la forme d'un "C" par chanfreinage de parties de coin des extrémités de chaque côté.

25. Stator selon la revendication 24, dans lequel le chanfrein est réalisé sous la forme d'une ligne droite ou d'une ligne courbe.

26. Stator selon la revendication 1, dans lequel la plaque de noyau en acier (11) est formée par poinçonnage de deux lignes sur une feuille électrique (10), et une gorge à encoche (150a) avant une forme identique à la partie de bord des Ts est formée sur une partie de base qui fait face à l'intérieur des Ts.

27. Stator selon la revendication 26, dans lequel une gorge d'éjection (151d) est formée sur les dents (151) de la plaque de noyau en acier (11) de façon à faciliter une opération de séparation de la plaque de noyau en acier (11).

28. Stator d'un moteur de type à rotor externe selon la revendication 1, dans lequel :
■ le noyau hélicoïdal (HC) d'une structure multicouche est formé par empilement de la plaque en acier (11) ayant une base en forme de ceinture et de Ts qui se promettent en saillie à partir de la bas, lors de l'enroulement de la plaque en acier (11) en hélice en partant d'une couche inférieure vers une couche supérieure ;
■ l'isolateur supérieur (60a) fait en un matériau électriquement isolant est appliqué sur un côté de dessus du noyau hélicoïdal (HC) sous une forme qui est complémentaire à une forme du noyau hélicoïdal ; et
■ l'isolateur inférieur (60b) fait en un matériau électriquement isolant est appliqué sur un côté de dessous du noyau hélicoïdal au moment de l'assemblage à l'isolateur supérieur (60a) sous une forme qui est complémentaire à une forme du noyau hélicoïdal (HC),
■ dans lequel une plaque en acier formant le noyau hélicoïdal (HC) comprend une gorge (152) ayant une forme complémentaire à la forme du noyau hélicoïdal sur une face supérieure ou inférieure de la plaque en acier (11), de façon à empêcher que la plaque en acier (11) ne se déroule dans une direction opposée à la direction hélicoïdale, lors du dépôt de la plaque en acier par enroulement de la plaque en acier dans une direction hélicoïdale, et de façon à empêcher également que la plaque en acier ne se desserre, et une partie de fixation comportant des projections faisant face à l'intérieur de la gorge de fixation et qui sont pressées dans la face supérieure ou inférieure de la plaque en acier ; et
■ une partie de base du noyau hélicoïdal comprend une encoche de façon à réduire une contrainte lors de l'enroulement du noyau.

29. Stator d'un moteur de type à rotor externe selon la revendication 1 ou 28, ou dans lequel :
■ le noyau hélicoïdal (HC) d'une structure multicouche est annulaire et formé par empilement de la plaque en acier (11) ayant une base en forme de ceinture et de Ts qui se projet tent en saillie à partir de la base lors de 1' enroulement de la plaque en acier (11) en hélice en partant d'une couche inférieure vers une couche supérieure ;
■ l'isolateur supérieur fait en un matériau électriquement isolant est appliqué sur un côté de dessus du noyau hélicoïdal sous une forme qui est complémentaire à une forme du noyau hélicoïdal (HC) ; et
■ l'isolateur inférieur fait en un matériau électriquement isolant est appliqué sous une forme qui est complémentaire à une forme du noyau hélicoïdal de façon à recouvrir un côté de dessous du noyau hélicoïdal au moment de l'assemblage à l'isolateur supérieur (60a), le noyau hélicoïdal comprenant :
■ une goupille élastique sur une face supérieure ou inférieure de chacune des Ts de la plaque de noyau en acier, et un trou complémentaire à la goupille élastique, de façon à empêcher que la plaque de noyau en acier (11) ne se déroule dans une direction opposée à une direction de rotation de l'hélice, et de façon à empêcher également que la plaque en acier ne se détache d'une couche sous-jacente/surjacente de la plaque de noyau en acier au moment de l'empilement de la plaque de noyau en acier (11) et de l'enroulement de la plaque de noyau en acier (11) en hélice ;
■ une encoche dans la base entre chacune de Ts adjacentes de la plaque de noyau en acier (11), de façon à réduire une contrainte lorsque la plaque de noyau en acier est enroulée ; et
■ une extrémité sensiblement en forme de "C" de chacune des Ts, de façon à réduire un bruit produit par un couple de denture durant un fonctionnement du moteur.

30. Procédé de fabrication d'un stator d'un moteur de type à rotor externe, comprenant les étapes consistant à :
■ fournir une feuille électrique (10) qui est un matériau de base ;
■ poinçonner le matériau de base, de façon à former deux rangées de plaques de noyau en acier (11) ayant une paire de parties de base (150) en forme de bande opposées dans un sens de la largeur, et des dents - ou Ts - (151) qui se projettent alternativement vers une partie de base opposée ;
■ former un noyau hélicoïdal (HC) annulaire multicouche par empilement, de la plaque de noyau en acier (11 lors de l'enroulement de la plaque de noyau en acier (11) en hélice en partant d'une couche inférieure vers une couche supérieure ; et
■ englober le noyau hélicoïdal (HC) dans un isolateur (60a,60b) fait en un matériau électrique ayant une forme qui est complémentaire à la forme du noyau hélicoïdal ;
**caractérisé par** les étapes consistant à :
■ former une gorge (152) au niveau de la partie de base (150) de la plaque de noyau en acier (11) de façon à réduire une contrainte durant l'enroulement du noyau hélicoïdal (HC) ; et
■ fournir des moyens de couplage (154a, 154b) au niveau de la plaque de noyau en acier (11) de façon à empêcher que la plaque de noyau en acier ne se déroule lorsque la plaque de noyau en acier est empilée.

31. Procédé selon la revendication 30, dans lequel le matériau de base est poinçonné en deux rangées de telle sorte qu'une encoche (150a) ayant une forme identique à une forme d'une extrémité d'un côté des Ts est formée dans la partie de base opposée aux Ts d'un côté.

32. Procédé selon la revendication 30, dans lequel les Ts de la plaque de noyau en acier ont une partie concave pour éjection formée en elles de façon à faciliter une opération de séparation des plaques de noyau en acier.

33. Procédé selon la revendication 30, dans lequel l'extrémité des Ts de la plaque de noyau en acier est réalisée sensiblement à une forme de "C" de façon à réduire des vibrations et un bruit produits par un couple de denture du noyau hélicoïdal.

34. Procédé selon la revendication 30 dans lequel l'étape d'englobement du noyau hélicoïdal comprend les étapes consistant à :
■ recouvrir un côté supérieur du noyau hélicoïdal avec un isolateur supérieur (60a) fait en un matériau électriquement isolant ayant une forme complémentaire à une forme d'une partie supérieure du noyau hélicoïdal (HC) ; et
■ recouvrir un côté inférieur du noyau hélicoïdal avec un isolateur inférieur (60b) fait en un matériau électriquement isolant ayant une forme complémentaire à une forme d'une partie inférieure du noyau hélicoïdal.

35. Procédé selon la revendication 30, dans lequel la partie de base de la plaque de noyau en acier (11) comporte une encoche de façon à réduire une contrainte lorsque le noyau est enroulé.
